# FASCICULE DE BREVET EUROPEEN

(11) **EP 3 436 307 B1**
(45) Date de publication et mention de la délivrance du brevet: **11.05.2022**
(21) Numéro de dépôt: 17716952.1
(22) Date de dépôt: 20.03.2017
(51) Int. Cl.: B60Q 1/08, B60Q 1/14, B60Q 1/18, B60Q 1/46, B60Q 1/12

(54) **PROJECTEUR DE VÉHICULE**
FAHRZEUGSCHEINWERFER
VEHICLE HEADLAMP

(30) Priorité: 29.03.2016 FR 1652688
(43) Date de publication de la demande: 06.02.2019
(73) Titulaire: PSA Automobiles SA, 78300 Poissy (FR)
(72) Inventeur: SEREZAT, Laurent, 91410 CORBREUSE (FR); BORE, Michael, 25420 VOUJEAUCOURT (FR)
(86) Numéro de dépôt international: PCT/FR2017/050638
(87) Numéro de publication internationale: WO 2017/168072

(56) Documents cités:
- DE-A1-102004 055 882
- DE-A1-102007 038 563
- JP-A- 2005 088 856
- JP-A- 2008 074 327
- US-A1- 2009 086 500

## Description

La présente invention concerne de manière générale un projecteur destiné à être monté sur un véhicule automobile.

Il est connu dans l'art antérieur des dispositifs d'éclairage de route montés sur un véhicule automobile. Ces dispositifs font généralement partie d'un projecteur ou phare situé à l'avant du véhicule et projetant un faisceau lumineux vers l'avant du véhicule pour éclairer la route. De manière générale ces dispositifs comprennent un module d'éclairage incluant une source de lumière, un réflecteur, une carte de circuit imprimé dans le cas d'une diode électroluminescente comme source lumineuse, potentiellement une lentille pour projeter la lumière émise vers l'avant et une glace située devant pour protéger le dispositif. Un problème de ces dispositifs est qu'ils sont trop rigides en termes de modularité. En effet, un module d'éclairage émet un seul type de faisceau de sorte que la photométrie du projecteur, c'est-à-dire la zone illuminée devant le véhicule, est statique quelle que soit la condition de circulation à moins d'utiliser un élément tel qu'un masque, un écran ou encore un barillet ce qui rend le système et sa fabrication plus compliquée.

Afin de remédier à ce type d'inconvénient, il a été trouvé d'utiliser plusieurs modules dans un même projecteur, chacun de ces modules émettant un faisceau particulier pour plus de modularité par exemple en modifiant leur forme, via un masque, ou encore leur intensité comme décrit dans US 2001/0028565. En revanche, un problème de ce type de dispositif est qu'il permet une certaine modularité d'éclairage mais au prix d'une performance issue d'un compromis optique des projecteurs du fait du nombre de fonctionnalités/distributions photométriques à réaliser. Des phases transitoires entre les différentes distributions photométriques provoquent également des gênes sur la route lors d'un passage d'un état à l'autre.

On connait également du JP2005088856A, un projecteur comprenant un module principal réalisant un feu de croisement et trois modules complémentaires fixes adjacents allumés successivement dans un virage. . Ce document ne permet pas d'assurer une photométrie modulable avec une grande variété de configurations d'éclairage.

On connaît enfin du document US 2009/0086500 A1 un projecteur comprenant un module principal pour feu de code et deux modules complémentaires orientables en azimut. Les deux modules complémentaires réalisent ensemble un faisceau complémentaire variable destiné à compléter le faisceau principal pour réaliser selon les besoins un faisceau de route adaptatif, un faisceau de virage et un faisceau pour autoroute. La position en site des faisceaux de chacun des modules complémentaires est modifiable par déplacement relatif de la source lumineuse et d'une optique à l'intérieur du module.

Un but de la présente invention est de répondre aux inconvénients des documents de l'art antérieurs mentionnés ci-dessus et en particulier, tout d'abord, de fournir un projecteur de véhicule économique, simple à mettre en œuvre et capable de fournir une photométrie modulable et combinant de multiples fonctionnalités à des niveaux de performances optimales.

Pour cela un premier aspect de l'invention concerne un projecteur caractérisé par la partie caractérisante de la revendication 1

Selon une caractéristique, l'unité de commande est apte à commander l'intensité de l'éclairage des modules complémentaires pour que le premier module complémentaire s'allume instantanément à intensité maximale puis le deuxième puis le troisième de manière à offrir un champ de vision nocturne maximal au conducteur du véhicule pendant le virage.

Selon une autre caractéristique, l'unité de commande les modules en partant du module le plus intérieur au virage vers le module principal, pour qu'ils s'éteignent progressivement jusqu' à la sortie du virage.

Un deuxième aspect de l'invention concerne un procédé de commande de l'éclairage des modules complémentaires d'un projecteur tel que décrit ci-dessus, caractérisé en ce qu'il consiste :
- à projeter respectivement et successivement les faisceaux des modules complémentaires à partir d'une face latérale du faisceau principal de croisement en fonction de l'angle de rotation du volant du véhicule pour réaliser un complément d'éclairage continu du faisceau principal à l'abord d'un virage ;
- à commander l'intensité de l'éclairage des modules complémentaires pour que le premier module complémentaire s'allume instantanément à intensité maximale puis le deuxième puis le troisième de manière à offrir un champ de vision nocturne maximal au conducteur du véhicule pendant le virage ;
- à éteindre progressivement les modules complémentaires en partant du module complémentaire le plus intérieur au virage vers le module d'éclairage principal jusqu' à la sortie du virage.

Un troisième aspect de l'invention concerne un procédé de commande de l'éclairage des modules complémentaires d'un projecteur tel que décrit ci-dessus, caractérisé en ce qu'il consiste, lorsque que le véhicule est à une vitesse inférieure à une vitesse déterminée :
- à projeter simultanément les faisceaux des modules complémentaires dès qu'un angle déterminé de rotation du volant du véhicule est détecté et/ou l'activation de l'indicateur de direction pour réaliser une fonction d'éclairage d'intersection, en complément de l'éclairage du faisceau principal ;
- à éteindre progressivement les modules en partant du module le plus intérieur au virage vers le module d'éclairage principal à mesure que l'angle de rotation du volant se rapproche d'un angle nul.

Selon une caractéristique du procédé décrit ci-dessus, tous les modules complémentaires sont allumés simultanément à puissance maximale dès qu'un angle de rotation du volant est détecté et/ou l'activation de l'indicateur de direction.

Un quatrième aspect de l'invention concerne un véhicule automobile comportant au moins un projecteur de véhicule tel que décrit ci-dessus.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente un projecteur selon un mode de réalisation de la présente invention.
- les figures 2A et 2B représentent un premier mode de réalisation de photométrie du projecteur de la présente invention,
- les figures 3A à 3D représentent quatre autres modes de réalisation de photométrie du projecteur de la présente invention,

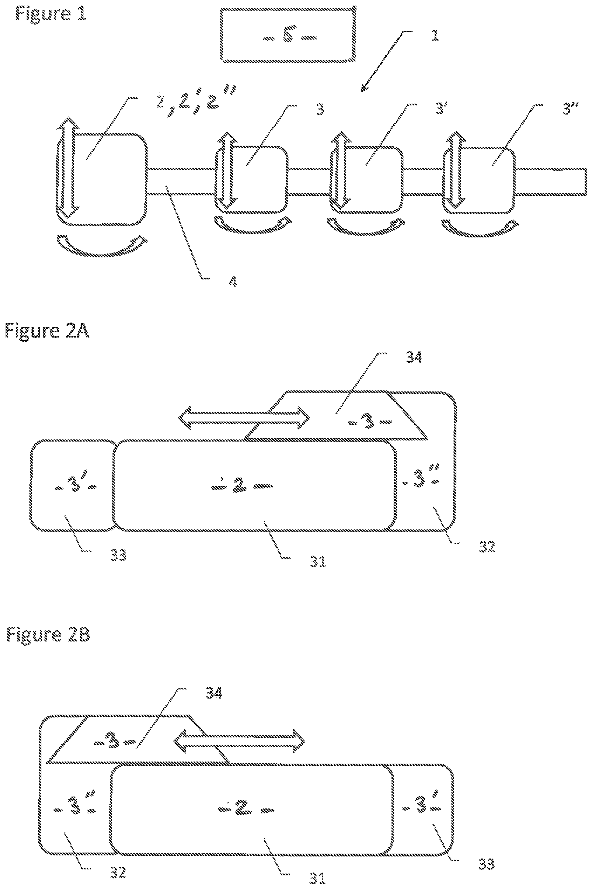

La figure 1 représente un projecteur de véhicule 1 selon un mode de réalisation de la présente invention.

Comme représenté, ce projecteur comprend un module principal 2 , 2', 2" agencé pour émettre un faisceau de lumière principal 31, 41, 45, 51, 61, 71 de préférence un feu de route 2"/croisement 2, 2', c'est à dire qu'il est un module bi-fonction pouvant émettre un faisceau de feu de croisement ou un faisceau de feu de route, qui comprend un ou plusieurs moteurs (non visible) agencé pour le régler en site et en azimut selon les flèches verticale et horizontale de la figure 1. Bien que cela ne soit pas visible sur la figure 1, le faisceau principal de croisement peut être à coupure plate, c'est à dire que sa photométrie (zone d'illumination) est essentiellement rectangulaire sans zone d'illumination agrandie pour le bas côté de la route ou à coupure à X° (par exemple 15°) pour que le faisceau principal illumine également le bas côté de la route.

Egalement, ce projecteur comprend une pluralité de modules complémentaires 3, 3', 3" agencés pour émettre chacun un faisceau de lumière complémentaire 34, 44, 54, 74 ; 33, 43, 53, 73 ; 32, 42, 52, 62, 72, différent du faisceau de lumière principal 41, 45, 51, 61, 71. Par différent du faisceau principal, il est entendu la forme du faisceau, son intensité ou du même genre. Les modules complémentaires 3, 3', 3" comprennent de préférence chacun un moteur agencé pour régler le module complémentaire auquel il est destiné en site et en azimut indépendamment les uns des autres comme représenté par les flèches verticales et horizontales.

En effet, le projecteur 1 comprend également un moyen de réglage 4, lequel peut inclure les moteurs précédemment évoqués, pour régler en site et en azimut chacun des modules d'éclairage 2, 2', 2", 3, 3', 3", principal et complémentaires, et une unité de commande 5 pour émettre un ordre aux moyens de réglages 4 pour orienter chacun des modules d'éclairage 2, 2', 2", 3, 3', 3" en site et en azimut indépendamment les uns des autres et commander l'intensité lumineuse de chaque module également indépendamment les uns des autres .

Les figures 2A et 2B représentent un mode de réalisation particulier de la présente invention dans lequel le module d'éclairage principal 2 est agencé pour émettre un faisceau de lumière 31 à coupure plate pour émettre un faisceau de feu de croisement (ou code) ». Ainsi le faisceau du module principal n'éclaire pas une zone supplémentaire du bas côté de la route plus en avant pas rapport au reste de la route. Cependant, au moins un 3 des trois modules complémentaires 3, 3', 3" est agencé pour projeter un faisceau de coupure symétrique 34 adjacent à un côté avant du faisceau de lumière à coupure plate 31 de manière à venir en complément du faisceau de lumière à coupure plate 31 pour éclairer cette zone supplémentaire du bas côté de la route. De plus, dans la mesure où le module complémentaire 3est orientable en azimut, le moyen de réglage 4 peut déplacer horizontalement le faisceau de coupure symétrique 34 entre les extrémités latérales du faisceau de lumière à coupure plate 31 éclairer, au choix un bas côté à gauche ou à droite du véhicule mettant ainsi en œuvre une gestion DàD/DàG (direction à droite/direction à gauche).

En complément, comme représenté sur les figures 2A et 2B les autres modules complémentaires 3' et 3" sont agencés pour projeter respectivement des faisceaux 33, 32 adjacents aux faces latérales du faisceau principal 31. Dans le cas de la figure 2A et de la figure 2B, le faisceau 32, a une forme rectangulaire, ce qui permet d'au moins partiellement le superposer avec le faisceau principal 2 et le faisceau à coupure symétrique 34 de manière à uniformiser le feu de croisement et est donc déplacé de préférence ensemble avec le faisceau de coupure 34.

On entend par adjacent la position des faisceaux complémentaires à la suite des faisceaux principaux. Cependant une légère superposition des faisceaux permettra de traiter l'homogénéité liée à l'association de ces différents faisceaux.

Un tel mode de réalisation permet d'assurer un complément d'éclairage à celui obtenu par le faisceau de croisement, avec prise en compte du sens de conduite (direction à droite DàD /direction à gauche DàG) sans avoir besoin de réglage mécanique.

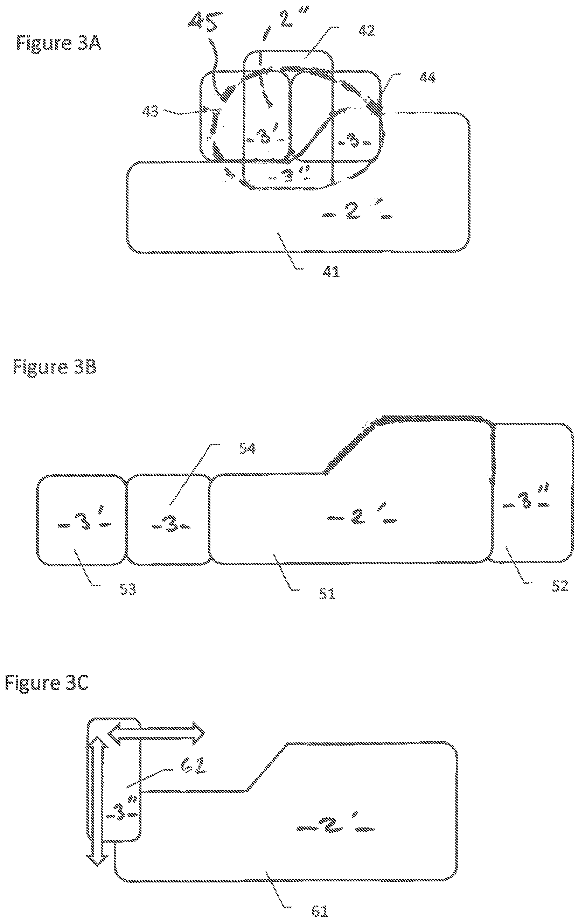

La figure 3A représente un autre mode de réalisation de l'invention dans lequel les modules complémentaires 3, 3', 3" sont agencés pour projeter de manière séquentielle leur faisceau 44, 43, 42 de sorte à superposer les faisceaux complémentaires séquentiellement avec le faisceau principal 41 de feu de croisement à coupure à 15°, ainsi qu'un faisceau appelé également «Spot » 45 émis par le faisceau principal de route 2".

On utilise le terme « Spot » parce ce qu'il se rapproche par sa forme ovoïde d'un spot d'éclairage, dont le contour est représenté par une ligne fermée discontinue, Le spot forme le faisceau de feu de route 45 en coopération avec le faisceau principal 41.

Un tel mode de réalisation permet d'obtenir un complément de la fonction feu de route.

La figure 3C représente un autre mode de réalisation de l'invention dans lequel au moins l'un 3" des modules complémentaires 3, 3', 3" est agencé de manière à pouvoir émettre un faisceau 62 pouvant se déplacer selon les flèches horizontales et verticales par rapport au faisceau principal 61.

Un tel mode de réalisation permet de suivre une cible identifiée, de préférence, par un détecteur d'obstacle ou du même genre, aptitude désignées également par les termes anglo-saxons « Marking Light ».

La figure 3B représente un autre mode de réalisation de l'invention dans lequel les modules complémentaires 3, 3', 3" sont agencés pour projeter respectivement des faisceaux 52, 53, 54 de sorte que par exemple, un premier module 3" puisse émettre un faisceau 52 adjacent à une première face latérale du faisceau principal 51 de croisement à coupure à 15°, et un deuxième module 3 puisse émettre un faisceau 54, adjacent à la deuxième face latérale du faisceau principal 51. Ainsi, les premier et deuxième modules complémentaires 3" et 3 sont agencés pour projeter chacun un faisceau 52 et 54, de part et d'autre du faisceau principal 51.Le troisième module 3' vient ensuite « compléter » le faisceau 54 émis par le deuxième module 3 en étant adjacent à la face extérieure du faisceau 54.

On pourra ajouter à cette combinaison une diminution de la puissance du faisceau principal 51 afin de limiter les éblouissements les conducteurs des véhicules venant de face par réflexion de lumière sur la chaussée, mais aussi l'éblouissement du conducteur provoqué par la rétrodiffusion de lumière par les gouttelettes.

Un tel mode de réalisation permet d'assurer un complément d'éclairage offert par le faisceau de feu de croisement, à droite et à gauche, du faisceau de croisement, dans le cas d'un roulage dans des conditions météorologiques difficiles désignées également par l'expression anglo-saxonne « Adverse Weather ».

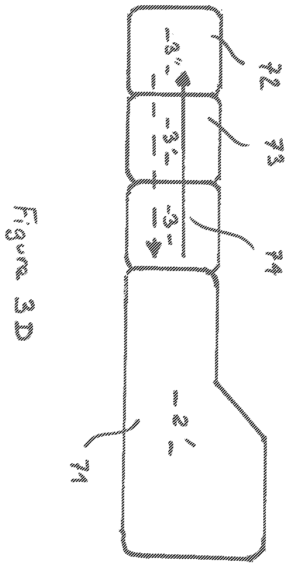

La figure 3D représente un autre mode de réalisation de l'invention dans lequel les modules complémentaires 3, 3', 3" sont agencés pour projeter respectivement des faisceaux 74, 73, et 72 successivement à partir d'une face latérale du faisceau principal 71 de croisement à coupure à 15°. Les faisceaux des modules complémentaires 3, 3', 3" viennent ainsi compléter le faisceau principal.

Un tel mode de réalisation est particulièrement intéressant en ce qu'il peut être avantageusement mis en œuvre en relation avec le rayon de braquage (ou angle au volant) du véhicule pour réaliser un complément d'éclairage du faisceau principal 71 dans les virages de manière continue.

On décrit ci-après un exemple de mise en œuvre en partant d'une situation où le véhicule roule en ligne droite, situation dans laquelle aucun des trois modules complémentaires 3', 3", 3" ne sont activés et où seul le faisceau principal 71 de croisement à coupure à 15° éclaire la route.

La flèche en trait plein illustre le cas où le conducteur attaque un virage dont la courbure nécessite d'abord un petit angle au volant puis un angle de plus en plus grand, allumant successivement en continu (pour ne pas créer de « trou » dans le faisceau global), le premier module complémentaire 3, émettant le faisceau 74, le deuxième module complémentaire 3', émettant le faisceau 73, puis enfin, le troisième module complémentaire 3 ", émettant le faisceau 72.

L'intensité de l'éclairage des modules complémentaires est commandée pour que le premier module complémentaire 3 s'allume très rapidement à intensité maximale au maximum quelques centaines de millisecondes pour arriver à 100% du flux puis le deuxième puis le troisième. Ainsi, lorsque le conducteur attaque un virage et que la courbure du virage augmente, son champ de vision nocturne soit maximal pendant tout le virage.

A l'inverse, comme représenté par la flèche en trait interrompu, dont la direction est à l'opposé de la flèche en trait plein, les modules en partant du module 3" le plus intérieur au virage vers le module principal 2, s'éteignent progressivement. Cette progressivité de l'extinction des modules 3", 3' puis 3 est importante pour limiter l'impact visuel du conducteur pour lequel une transition brutale de l'intensité lumineuse ou flux lumineux pourrait détourner involontairement son attention. Elle peut se faire pendant un temps d'une seconde à quelques secondes.

On se référera au document US2001/0028565 pour illustrer l'évolution de l'intensité lumineuse en fonction de l'angle de rotation du volant.

Un tel mode de réalisation permet à moindre coût d'implémenter une fonction d'éclairage désignée par l'acronyme anglo-saxon «DBL : Dynamic Bending Light ».

L'invention a également pour objet un procédé de commande de l'éclairage des modules complémentaires 3, 3' et 3"mis en œuvre par l'unité de commande 5 pour réaliser la fonction d'éclairage « DBL ».

A cet effet, le procédé consiste :
- à projeter respectivement les faisceaux 74, 73, et 72 successivement à partir d'une face latérale du faisceau principal 71 de croisement en fonction de l'angle de rotation du volant du véhicule 1 pour réaliser un complément d'éclairage continu du faisceau principal 71 à l'abord d'un virage ;
- à commander l'intensité de l'éclairage des modules complémentaires 3, 3', 3" pour que le premier module complémentaire 3 s'allume instantanément à intensité maximale puis le deuxième 3' puis le troisième 3" de manière à offrir un champ de vision nocturne maximal au conducteur du véhicule pendant tout le virage ;
- à éteindre progressivement les modules 3, 3', 3" en partant du module 3" le plus intérieur au virage vers le module principal 2, jusqu' à la sortie du virage.

L'invention a également pour objet un procédé de commande de l'éclairage des modules complémentaires 3, 3' et 3"mis en œuvre par l'unité de commande 5, pour réaliser la fonction d'éclairage en virages serrés ou aux intersections désignée également par l'expression anglo-saxonne « Cornering Light » essentiellement utilisée en zone urbaine et à faible vitesse.

Cette fonction complémentaire d'éclairage permet d'éclairer l'intérieur du virage tant que la vitesse du véhicule est inférieure à 40 Km/h (conduite urbaine, route sinueuse, intersection, manœuvre de parking, ...). Cette fonction se déclenche suite à l'activation de l'indicateur de direction correspondant ou à partir d'un certain angle de rotation du volant.

Cette fonction est habituellement réalisée par le feu antibrouillard correspondant au sens du virage et qui s'allume ou s'éteint en fonction de l'angle de rotation du volant.

Une telle fonction est désignée « statique » en ce que le feu antibrouillard est statique, non mobile en rotation (azimut).

Grace aux modules complémentaires selon l'invention, réglables, notamment en azimut, il est donc possible d'effectuer du « Cornering Light » dynamique.

A la différence de la fonction « DBL », dans le cas de la fonction « Cornering Light », tous les modules complémentaires sont allumés simultanément à puissance maximale dès qu'un angle de rotation du volant est détecté et/ou l'activation de l'indicateur de direction, puis ils s'éteignent progressivement à mesure que l'angle de rotation du volant se rapproche d'un angle nul.

## Revendications

1. Projecteur de véhicule (1) comprenant un module d'éclairage principal (2) agencé pour émettre un faisceau de lumière principal (71) correspondant à un feu de croisement, une pluralité de modules d'éclairage complémentaires (3, 3', 3") adjacents, agencés pour émettre chacun un faisceau de lumière complémentaire (74, 73, 72) différent dudit faisceau de lumière principal (71), un moyen de réglage (4) en site et en azimut de chacun desdits modules d'éclairage (2, 2', 2", 3, 3', 3"), et une unité de commande (5), caractérisé en ce le moyen de réglage permet de régler l'orientation en site et en azimut chacun desdits modules d'éclairage complémentaires indépendamment les uns des autres de manière à réaliser plusieurs fonctions photométriques distinctes, et en ce que les modules complémentaires (3, 3', 3") sont agencés et commandés par l'unité de commande (5) qui est apte à commander l'intensité d'éclairage et l'orientation de chacun des modules d'éclairage complémentaires pour projeter respectivement et successivement dans l'espace et dans le temps leurs faisceaux (74, 73, et 72) à partir d'une face latérale du faisceau principal (71) en fonction de l'angle de rotation du volant du véhicule (1) pour réaliser un complément d'éclairage continu du faisceau principal (71) au cours d'un virage.

2. Projecteur selon la revendication précédente, **caractérisé en ce que** l'unité de commande (5) est apte à commander l'intensité de l'éclairage des modules complémentaires (3, 3', 3") pour que le premier module complémentaire (3) s'allume instantanément à intensité maximale puis le deuxième (3') puis le troisième (3") de manière à offrir un champ de vision nocturne maximal au conducteur du véhicule pendant le virage.

3. Projecteur selon la revendication précédente, **caractérisé en ce que** l'unité de commande (5) commande les modules en partant du module (3") le plus intérieur au virage vers le module principal (2), pour qu'ils s'éteignent progressivement jusqu' à la sortie du virage.

4. Procédé de commande de l'éclairage des modules complémentaires (3, 3', 3") d'un projecteur selon l'une des revendications 2 et 3, **caractérisé en ce qu'**il consiste :
- à projeter respectivement et successivement les faisceaux (74, 73, 72) des modules complémentaires (3, 3', 3") à partir d'une face latérale du faisceau principal (71) de croisement en fonction de l'angle de rotation du volant du véhicule (1) pour réaliser un complément d'éclairage continu du faisceau principal (71) à l'abord d'un virage ;
- à commander l'intensité de l'éclairage des modules complémentaires (3, 3', 3") pour que le premier module complémentaire (3) s'allume instantanément à intensité maximale puis le deuxième (3') puis le troisième (3") de manière à offrir un champ de vision nocturne maximal au conducteur du véhicule (1) pendant le virage ;
- à éteindre progressivement les modules complémentaires (3, 3', 3") en partant du module complémentaire (3") le plus intérieur au virage vers le module d'éclairage principal (2) jusqu' à la sortie du virage.

5. Procédé de commande de l'éclairage des modules complémentaires (3, 3', 3") d'un projecteur selon la revendication 1, **caractérisé en ce qu'**il consiste, lorsque que le véhicule est à une vitesse inférieure à une vitesse déterminée :
- à projeter simultanément les faisceaux (74, 73, 72) des modules complémentaires (3, 3', 3") dès qu'un angle déterminé de rotation du volant du véhicule (1) est détecté et/ou l'activation de l'indicateur de direction pour réaliser une fonction d'éclairage d'intersection, en complément de l'éclairage du faisceau principal (71) ;
- à éteindre progressivement les modules (3, 3', 3") en partant du module (3") le plus intérieur au virage vers le module d'éclairage principal (2) à mesure que l'angle de rotation du volant se rapproche d'un angle nul.

6. Procédé selon la revendication précédente, **caractérisé en ce que** tous les modules complémentaires sont allumés simultanément à puissance maximale dès qu'un angle de rotation du volant est détecté et/ou l'activation de l'indicateur de direction.

7. Véhicule automobile (1) comportant au moins un projecteur de véhicule selon l'une des revendications 1 à 3.

## Patentansprüche

1. Fahrzeugscheinwerfer (1) mit einem Hauptbeleuchtungsmodul (2), das so angeordnet ist, dass es ein Hauptlichtbündel (71) entsprechend einem Abblendlicht aussendet, einer Vielzahl von benachbarten Zusatzbeleuchtungsmodulen (3, 3', 3"), die so angeordnet sind, dass sie jeweils ein Zusatzlichtbündel (74, 73, 72) aussenden, das sich von dem Hauptlichtbündel (71) unterscheidet, ein Mittel (4) zur Einstellung der Höhen- und Azimutausrichtung jedes der Beleuchtungsmodule (2, 2', 2", 3, 3', 3") und eine Steuereinheit (5), **dadurch gekennzeichnet, dass** das Einstellmittel die Einstellung der Höhen- und Azimutausrichtung jedes der ergänzenden Beleuchtungsmodule unabhängig voneinander ermöglicht, so dass mehrere unterschiedliche photometrische Funktionen realisiert werden können, und dass die komplementären Module (3, 3', 3") von der Steuereinheit (5) angeordnet und gesteuert werden, die in der Lage ist, die Beleuchtungsintensität und die Ausrichtung jedes der komplementären Beleuchtungsmodule zu steuern, um jeweils und nacheinander im Raum und in der Zeit ihre Strahlen (74, 73, und 72) von einer Seitenfläche des Hauptstrahls (71) aus in Abhängigkeit vom Drehwinkel des Lenkrads des Fahrzeugs (1), um eine kontinuierliche Zusatzbeleuchtung des Hauptstrahls (71) während einer Kurve zu erreichen.

2. Scheinwerfer nach dem vorhergehenden Anspruch, **dadurch gekennzeichnet, dass** die Steuereinheit (5) geeignet ist, die Intensität der Beleuchtung der Zusatzmodule (3, 3', 3") so zu steuern, dass das erste Zusatzmodul (3) sofort mit maximaler Intensität leuchtet, dann das zweite (3') und dann das dritte (3"), um dem Fahrer des Fahrzeugs während der Kurve ein maximales Nachtsichtfeld zu bieten.

3. Scheinwerfer nach dem vorhergehenden Anspruch, **dadurch gekennzeichnet, dass** die Steuereinheit (5) die Module ausgehend vom kurveninnersten Modul (3") in Richtung des Hauptmoduls (2) so steuert, dass sie bis zum Verlassen der Kurve allmählich ausgeschaltet werden.

4. Verfahren zur Steuerung der Beleuchtung der Zusatzmodule (3, 3', 3") eines Scheinwerfers nach einem der Ansprüche 2 und 3, **dadurch gekennzeichnet, dass** es aus folgenden Schritten besteht:
- die Lichtbündel (74, 73, 72) der Zusatzmodule (3, 3', 3") jeweils und nacheinander von einer Seitenfläche des Hauptabblendlichtbündels (71) aus in Abhängigkeit vom Drehwinkel des Lenkrads des Fahrzeugs (1) zu projizieren, um eine kontinuierliche Zusatzbeleuchtung des Hauptlichtbündels (71) am Anfang einer Kurve zu realisieren ;
- die Beleuchtungsintensität der Zusatzmodule (3, 3', 3") so zu steuern, dass das erste Zusatzmodul (3) sofort mit maximaler Intensität aufleuchtet, dann das zweite (3') und dann das dritte (3"), so dass dem Fahrer des Fahrzeugs (1) während der Kurve ein maximales Nachtsichtfeld geboten wird ;
- die Zusatzmodule (3, 3', 3") ausgehend vom kurveninnersten Zusatzmodul (3") in Richtung des Hauptbeleuchtungsmoduls (2) bis zum Verlassen der Kurve schrittweise auszuschalten.

5. Verfahren zur Steuerung der Beleuchtung der Zusatzmodule (3, 3', 3") eines Scheinwerfers nach Anspruch 1, **dadurch gekennzeichnet, dass** es darin besteht, wenn sich das Fahrzeug bei einer Geschwindigkeit befindet, die geringer ist als eine bestimmte Geschwindigkeit:
- die Lichtbündel (74, 73, 72) der Zusatzmodule (3, 3', 3") gleichzeitig zu projizieren, sobald ein bestimmter Drehwinkel des Lenkrads des Fahrzeugs (1) und/oder die Aktivierung des Fahrtrichtungsanzeigers erfasst wird, um eine Kreuzungsbeleuchtungsfunktion zu realisieren, die die Beleuchtung des Hauptlichtbündels (71) ergänzt;
- allmähliches Ausschalten der Module (3, 3', 3") ausgehend vom kurveninnersten Modul (3") in Richtung des Hauptbeleuchtungsmoduls (2), wenn sich der Drehwinkel des Lenkrads einem Winkel von Null nähert.

6. Verfahren nach dem vorhergehenden Anspruch, **dadurch gekennzeichnet, dass** alle Zusatzmodule gleichzeitig mit maximaler Leistung eingeschaltet werden, sobald ein Lenkraddrehwinkel und/oder die Aktivierung des Fahrtrichtungsanzeigers erkannt wird.

7. Kraftfahrzeug (1) mit mindestens einem Fahrzeugscheinwerfer nach einem der Ansprüche 1 bis 3.

## Claims

1. A vehicle headlamp (1) comprising a main lighting module (2) arranged to emit a main light beam (71) corresponding to a low beam, a plurality of adjacent complementary lighting modules (3, 3', 3"), each arranged to emit a complementary light beam (74, 73, 72) different from said main light beam (71) means for adjusting (4) the elevation and azimuth of each of said light modules (2, 2', 2", 3, 3', 3"), and a control unit (5), **characterized in that** the adjusting means is capable of adjusting the elevational and azimuthal orientation of each of said complementary light modules independently of each other so as to perform a plurality of distinct photometric functions and **in that** the complementary modules (3, 3', 3") are arranged and controlled by the control unit (5) which is able to control the lighting intensity and the orientation of each of the complementary lighting modules in order to project their beams (74, 73, and 72) from a side face of the main beam (71) according to the angle of rotation of the steering wheel of the vehicle (1) in order to achieve a continuous complementary lighting of the main beam (71) during a turn.

2. Headlamp according to the preceding claim, **characterized in that** the control unit (5) is able to control the intensity of the lighting of the complementary modules (3, 3', 3") so that the first complementary module (3) lights up instantaneously at maximum intensity, followed by the second (3') and then the third (3") so as to offer a maximum field of night vision to the driver of the vehicle during the turn.

3. Headlamp according to the preceding claim, **characterized in that** the control unit (5) controls the modules starting from the module (3") furthest to the inside of the bend towards the main module (2), so that they are progressively switched off until they leave the bend.

4. Method of controlling the lighting of the complementary modules (3, 3', 3") of a headlamp according to one of claims 2 and 3, **characterized in that** it consists:
- projecting respectively and successively the beams (74, 73, 72) of the complementary modules (3, 3', 3") from a lateral face of the main dipped beam (71) as a function of the angle of rotation of the steering wheel of the vehicle (1) in order to provide a continuous complement of illumination of the main beam (71) on the approach to a bend;
- controlling the intensity of the lighting of the complementary modules (3, 3', 3") so that the first complementary module (3) lights up instantaneously at maximum intensity, then the second (3') and then the third (3") so as to offer a maximum field of night vision to the driver of the vehicle (1) during the bend;
- to progressively switch off the additional modules (3, 3', 3") starting from the additional module (3") furthest to the inside of the bend towards the main lighting module (2) until the exit of the bend.

5. Method of controlling the lighting of the complementary modules (3, 3', 3") of a headlamp according to claim 1, **characterised in that** it consists, when the vehicle is at a speed lower than a given speed :
- in simultaneously projecting the beams (74, 73, 72) of the complementary modules (3, 3', 3") as soon as a determined angle of rotation of the vehicle's steering wheel (1) is detected and/or the activation of the direction indicator in order to carry out an intersection lighting function, in addition to the lighting of the main beam (71);
- gradually turning off the modules (3, 3', 3") starting from the module (3") innermost to the bend towards the main lighting module (2) as the steering wheel rotation angle approaches zero.

6. Method according to the preceding claim, **characterized in that** all additional modules are switched on simultaneously at maximum power as soon as a steering wheel rotation angle is detected and/or the activation of the direction indicator.

7. Motor vehicle (1) with at least one vehicle headlamp according to any of claims 1 to 3.
